# EUROPÄISCHE PATENTSCHRIFT

(11) **EP 2 585 708 B1**
(45) Veröffentlichungstag und Bekanntmachung des Hinweises auf die Patenterteilung: **04.08.2021**
(21) Anmeldenummer: 11722371.9
(22) Anmeldetag: 19.05.2011
(51) Int. Cl.: F02N 11/00, F02N 11/08

(54) **STARTVORRICHTUNG UND STARTVERFAHREN EINER BRENNKRAFTMASCHINE MIT MEHRFACHEN STARTERMOTOREN**
START DEVICE AND START METHOD OF AN INTERNAL COMBUSTION ENGINE WITH MUTIPLE STARTER MOTORS
DISPOSITIF ET MÉTHODE DE DÉMARRAGE POUR MOTEUR À COMBUSTION INTERNE POURVUS DE PLUSIEURS DÉMARREURS

(30) Priorität: 23.06.2010 DE 102010030398
(43) Veröffentlichungstag der Anmeldung: 01.05.2013
(73) Patentinhaber: SEG Automotive Germany GmbH, 70499 Stuttgart (DE)
(72) Erfinder: KLEIN, Frank, 71296 Heimsheim (DE); BIESSENBERGER, Thomas, 73614 Schorndorf (DE); WANNER, Hartmut, 71083 Herrenberg-Oberjesingen (DE)
(74) Vertreter: Steinbauer, Florian
(86) Internationale Anmeldenummer: PCT/EP2011/058133
(87) Internationale Veröffentlichungsnummer: WO 2011/160901

(56) Entgegenhaltungen:
- DE-A1- 10 318 848
- DE-A1-102005 006 248
- DE-A1-102006 027 702
- DE-C1- 19 852 085
- DE-C1- 19 951 597
- JP-A- 59 082 575
- JP-A- H01 138 369
- US-A1- 2008 264 374

## Beschreibung

Die Erfindung bezieht sich auf eine Startvorrichtung, insbesondere für einen Start-Stopp-Betrieb, mit einer Startersteuerung mit einer Mehrzahl von Startermotoren und mindestens einer Kopplungsvorrichtung, mit der zum Starten einer Brennkraftmaschine jeder Startermotor mit der Brennkraftmaschine koppelbar ist.

Die Erfindung bezieht sich auch auf ein Startsystem für einen Start-Stopp-Betrieb mit einer Startvorrichtung, die eine Startersteuerung, einen Startermotor mit Kopplungsvorrichtung und eine Start-Stopp-Steuerung umfasst.

Die Erfindung bezieht sich ferner auf ein Verfahren zum Betreiben einer Startvorrichtung mit einer Startersteuerung und einer Mehrzahl von Startermotoren und dazugehörigen Kopplungsvorrichtungen, wobei zum Starten einer Brennkraftmaschine zumindest die Startermotoren von der Startersteuerung angesteuert werden.

Die Erfindung bezieht sich auch auf ein Computerprogrammprodukt.

### Stand der Technik

Es ist bekannt Start-Stopp-Systeme für Brennkraftmaschinen in Kraftfahrzeugen vorzusehen, um den Kraftstoffverbrauch und CO₂-Emissionen zu senken. Aufgrund eines Start-Stopp-Systems wird eine Startvorrichtung über die Lebensdauer intensiver beansprucht. Deshalb sind verschiedene Sondermaßnahmen gegenüber herkömmlichen Startvorrichtungen ohne Start-Stopp-System vorgesehen, um die erhöhte Beanspruchung mit in etwa der gleichen oder längeren Lebensdauer wie herkömmliche Systeme zu gewährleisten.

Die DE 10 2005 006 248 A1 beschreibt eine Parallelstartanlage mit mehreren parallel geschalteten Startermotoren und jeweils einem Einrückrelais, um jeweils ein Starterritzel in den Zahnkranz einer Brennkraftmaschine einzuspuren und mit einem Leistungsrelais, das einen Hauptstrompfad zum zugehörigen Startermotor schaltet.

Die DE 199 51 597 C1 beschreibt eine Startvorrichtung für Brennkraftmaschinen mit mindestens zwei Startern mit unterschiedlicher Untersetzung, die über eine Schwellwert-Steuerung abhängig von äußeren Parametern wie Motortemperatur und Motordrehzahl, derart ansteuerbar sind, dass der eine Starter oder der andere Starter oder beide gemeinsam, insbesondere im Start-Stop-Betrieb, aktivierbar sind.

Die JP H01 138369 A offenbart eine Brennkraftmaschine mit zweit Startermotoren, wobei die Startermotoren gleichzeitig verwendet werden können, um die Brennkraftmaschine zu starten, oder auch einzeln und unabhängig voneinander. Beispielsweise können die Startermotoren alternierend verwendet werden.

Dem Anmelder ist eine Steuerung für parallel anordenbare Starter zum Starten einer Brennkraftmaschine bekannt. Die Steuerung ist sternförmig mit der Startern verbunden und umfasst eine Prüfleitung zu jedem Starter, so dass die Startermotoren gleichzeitig nach einem erfolgreichen Einspuren aller Starterritzel bestromt werden.

Es ist Aufgabe der Erfindung eine Startvorrichtung, ein Startsystem, ein Verfahren zum Betreiben einer Startvorrichtung und ein Computerprogrammprodukt der eingangs genannten Art derart weiterzubilden, dass eine Startvorrichtung mit einer hohen Anzahl an Startzyklen über die Lebensdauer der Brennkraftmaschine verteilt einfach realisierbar ist.

### Offenbarung der Erfindung

Erfindungsgemäß wird die Aufgabe durch den Gegenstand der unabhängigen Patentansprüche gelöst. Die abhängigen Ansprüche definieren bevorzugte Weiterbildungen der Erfindung.

Es ist ein Gedanke der Erfindung, eine herkömmliche Startvorrichtung mit einem Startermotor durch eine Startvorrichtung mit mindestens einem weiteren, hinzugefügten Startermotor zu ersetzen. Somit wird die Leistung eines großen Startermotors auf mindestens zwei oder mehrere Startermotoren verteilt. Dies bringt mehrere Vorteile mit sich. Die benötigte Leistung zum Starten einer Brennkraftmaschine kann somit durch Hinzuschaltung von mehreren Startermotoren gezielt gesteigert oder reduziert werden und an eine variierende, benötigte Startleistung im Vorfeld angepasst werden. Vorzugsweise werden herkömmliche Startermotoren eingesetzt. Somit entfallen aufwendige Sondermaßnahmen, die mitunter zu einer Kostenexplosion führen können.

Erfindungsgemäß wird die Aufgabe dadurch gelöst, dass verschiedene Startzustände der Brennkraftmaschine charakterisiert werden, so dass von der Startvorrichtung in Abhängigkeit von definierten Betriebszuständen alle, ein Teil oder einzelne Startermotoren zum Starten der Brennkraftmaschine von der Startersteuerung ansteuerbar sind. Die Startersteuerung ist derart ausgebildet, die Startermotoren alternierend bei Warmstarts anzusteuern. Die Startvorrichtung umfasst eine Diagnosevorrichtung der Startermotoren. Die Startersteuerung ist derart ausgebildet, die Startermotoren in Abhängigkeit von einem Defekt nicht mehr anzusteuern. Erfindungsgemäß bewertet die Diagnosevorrichtung einen Verschleißgrad der Startermotoren und die Startermotoren werden alternierend in Abhängigkeit von dem bewerteten Verschleißgrad reduziert angesteuert.

Die Aufgabe wird also durch ein Verfahren dadurch gelöst, dass von definierten Betriebszuständen abhängig von der Startersteuerung entschieden und ausgeführt wird, wie viele Startermotoren, und insbesondere welche Startermotoren, zum Starten einer Brennkraftmaschine von der Startersteuerung angesteuert werden.

Die Aufgabe wird mit einem Startsystem einer Brennkraftmaschine dadurch gelöst, dass das Startsystem mindestens einen weiteren Startermotor mit einer Kopplungsvorrichtung zum Starten einer Brennkraftmaschine umfasst. Dies hat den Vorteil, dass in einem Start-Stopp-Betrieb, bei einem sogenannten Warmstart die Brennkraftmaschine beispielsweise nur mit einem kleinen Startermotor gestartet werden muss, so dass ein Spannungseinbruch des Bordnetzes, der herkömmlicherweise mit einem großen Startermotor erfolgt, deutlich reduziert ist und die Fahrzeugelektrik und -elektronik nicht stört.

Vorzugsweise wird die Startvorrichtung, das Startsystem zum Starten von großvolumigen Brennkraftmaschinen oder mit großen Zusatzlasten beispielsweise an Brennkraftmaschinen mit festangeflanschten Hydraulikpumpen, beispielsweise im Nutzfahrzeugbereich, eingesetzt. Die erfindungsgemäße Startvorrichtung ist auch vorteilhaft zur Schaltzahlerhöhung bei sogenannten Vielschaltern, wie Fahrzeuge im Lieferverkehr, wie beispielsweise Paketdienste, Getränkelaster oder Baustellenfahrzeuge, wie Kräne, Bagger und Erdkipper. Diese müssen nicht notwendig ein Start-Stopp-Startsystem aufweisen.

Startermotoren werden meist auf das größte maximal aufzubringende Drehmoment ausgelegt, das bei einer Brennkraftmaschine auftritt, wenn diese sich in einem kalten Zustand befindet. Das aufzubringende Startdrehmoment, um eineB rennkraftmaschine zu starten, ist deutlich reduziert, wenn die Brennkraftmaschine mit dem darin befindlichen Öl betriebsbedingt warm ist, damit ist das Öl nicht mehr zäh.

Ferner gibt es auch saisonal bedingte Unterschiede für einen sogenannten Kaltstart einer Brennkraftmaschine, da im Winter bei Temperaturen deutlich unter 0°C ein Kaltstart ein erheblich höheres Drehmoment erfordert, als ein Kaltstart bei Temperaturen im Bereich von 20°C.

Gemäß einer die Erfindung weiterbildenden Ausführungsform sind die Startermotoren und insbesondere die Kopplungsvorrichtung in unterschiedlicher Baugröße und mit verschiedenen Betriebskennlinien ausgebildet, insbesondere ist mindestens ein Startermotor mit einem hohen Drehmoment und mindestens ein anderer Starter als Hochlaufunterstützung ausgebildet. Unterschiedliche Startermotoren haben den Vorteil, dass somit mindestens ein bestimmter Startermotor für den Kaltstart vorgesehen werden kann und mindestens ein anderer Startermotor für einen Warmstart.

Ferner können die Startermotoren auch während eines Startvorgangs unterschiedliche Aufgaben erfüllen, so dass ein Startermotor für das Losbrechen der Brennkraftmaschine während eines Startvorgangs vorgesehen ist und ein weiterer Startermotor als Hochlaufunterstützung ausgebildet ist.

Um einen Zahnkranzverschleiß zu minimieren, sind vorzugsweise die Startermotoren auf Auspendelstellen einer Antriebswelle der Brennkraftmaschine, insbesondere zu einem Zahnkranz der Brennkraftmaschine versetzt zu einander angeordnet. Der Zahnverschleiß am Starterritzel und am Zahnkranz ist somit bei einer Kopplungsvorrichtung minimiert, die derart aufgebaut ist, dass ein Starterritzel in den Zahnkranz, vorzugsweise mit einem Einrückrelais, ein- und ausgerückt wird.

Um im Startvorgang die Startermotoren gleichzeitig zu belasten, umfasst vorzugsweise die Startvorrichtung eine Einrichtung zur Synchronisation zur gleichzeitigen Strombeaufschlagung der Startermotoren, wobei die Startvorrichtung insbesondere mit einer Prüfeinrichtung ausgebildet ist, mit der überprüft wird, ob die jeweilige Kopplungsvorrichtung richtig eingekoppelt ist, bevor jeder Startermotor am Motor bestromt wird. Somit wird sicher gestellt, dass alle Startermotoren gleichzeitig belastet werden und mittels der Prüfeinrichtung ist auch sichergestellt, dass eine mechanische Kopplung für den jeweiligen Startermotor und die Brennkraftmaschine zum Starten vorliegt, so dass ein schneller Verschleiß der Kopplungsvorrichtung vermieden wird.

Erfindungsgemäß wird von definierten Betriebszuständen abhängig von der Startersteuerung entschieden, wie viele Startermotoren zum Starten der Brennkraftmaschine von der Startersteuerung angesteuert werden. Die Betriebszustände sind durch Startbedingungen charakterisiert, die die Temperatur der Brennkraftmaschine, der Startermotoren, der Umgebungstemperatur, den Batteriezustand bzw. Energieversorgungszustand und den Verschleißgrad umfassen können oder sie sind durch einen Kalt- oder Warmstart definiert.

Gemäß einem die Erfindung weiterbildenden Verfahren sind definierte Betriebszustände durch Temperaturfenster der Brennkraftmaschine und insbesondere der verschiedenen Startermotoren festgelegt und die Startermotoren werden abhängig vom jeweiligen Temperaturfenster, alle, zum Teil oder einzeln angesteuert. Temperaturfenster sind eine einfache Möglichkeit Betriebszustände festzulegen, außerdem steht die Temperatur der Brennkraftmaschine als Information der Motorsteuerung zur Verfügung, da sie bereits für andere Anwendungen benötigt wird.

Gemäß einem weiter bevorzugten Verfahren werden für einen Kaltstart alle Startermotoren mit Strom beaufschlagt und insbesondere die Anzahl der Startermotoren in Abhängigkeit von Stufen von Betriebszuständen, insbesondere von Temperaturstufen angesteuert. Somit entspricht die Anzahl der Temperaturstufen der Anzahl der Startermotoren. Sind zwei Startermotoren vorgesehen, so wird zwischen einer Kalttemperaturstufe und einer Warmtemperaturstufe unterschieden, sind drei, vier oder noch mehr Startermotoren vorgesehen, so gibt es entsprechend drei, vier oder mehr Temperaturstufen.

Erfindungsgemäß werden die Startermotoren bei Warmstarts in reduzierter Anzahl, insbesondere im Start-Stopp-Betrieb, alternierend oder in einem Zyklus angesteuert. Die Anzahl der Startermotoren beim Warmstart zu reduzieren, bringt mehrere Vorteile. Die insgesamt erreichbaren Startzyklen addieren sich aufgrund der einzelnen Startermotoren auf. Höhere Startzyklen sind für einen Start-Stopp-Betrieb notwendig, eine höhere Lebensdauer gegenüber einer herkömmlichen Startvorrichtung ergibt sich, da die Startzyklen auf mehrere Startermotoren verteilt sind. Somit können herkömmliche Startermotoren ohne aufwendige konstruktive Sondermaßnahmen eingesetzt werden, die beispielsweise zu einer exponentiellen Kostenerhöhung führen können. Ein weiterer Vorteil ist, dass ein für die Fahrzeugelektrik /-elektronik stark störender Spannungseinbruch der Bordnetzspannung während des Fahrzeugbetriebs reduziert wird und somit nicht mehr zu Fehlern oder Zusatzmaßnahmen z.B. bei Steuergeräten führt. Ein weiterer Vorteil ist, dass eine Brennkraftmaschine schneller mehrfach hintereinander eingeschaltet werden kann, weil die Auslaufzeit eines Startermotors nicht mehr relevant ist, da bei einem weiteren Start der Brennkraftmaschine, der kurz hinter einem ersten Start erfolgt, ein anderer Startermotor zum Starten eingesetzt wird. Somit wird die für einen Start-Stopp-Betrieb benötigte Schaltzahl von erfindungsgemäßen Startvorrichtungen erreicht. Ab wann es sich um einen Warmstart oder um einen Kaltstart handelt, kann vom Typ der Brennkraftmaschine abhängig gemacht werden, oder von anderen Faktoren.

Gemäß einer die Erfindung weiterbildenden Ausführungsform werden im Betrieb die Startermotoren überwacht, insbesondere die Stromaufnahme und die Startdauer, um die Startermotoren vom Verschleißgrad abhängig anzusteuern. Erfindungsgemäß wird der Verschleißgrad der Startermotoren bewertet und gespeichert. Somit umfasst das Verfahren eine Diagnosevorrichtung, die das Betriebsverhalten der Startermotoren aufzeichnet und gegebenenfalls vergleicht, um daraus Rückschlüsse zu ziehen, wie hoch ein Verschleißgrad der Startermotoren bzw. einer jeweiligen Kopplungsvorrichtung eingetreten ist. Danach kann ein identifizierter Startermotor abhängig vom Verschleißgrad reduziert, normal oder verstärkt für zukünftige Startvorgänge insbesondere für Warmstarts eingesetzt werden.

Bevorzugt kann der Verschleißgrad qualitativ bewertet werden. Es wird dann entweder ein Fehler aufgezeichnet, oder eine Warnung abgegeben, beispielsweise, dass sehr bald die Startvorrichtung nicht mehr funktionieren wird oder der Startermotor bzw. die Startvorrichtung nur noch in Notlauffunktion funktioniert, dass heißt, für Warmstarts insbesondere für den Start-Stopp-Betrieb nicht mehr eingesetzt wird. Ferner kann auch der Batteriezustand überwacht werden und davon abhängig die Startermotoren angesteuert werden, so dass ein möglichst effizienter Energieeinsatz beim Starten der Brennkraftmaschine realisiert wird, wenn es möglicherweise nicht primär um eine Geschwindigkeit im Startvorgang geht.

Die Aufgabe wird auch durch ein Computerprogrammprodukt dadurch gelöst, dass das Computerprogrammprodukt in einen Programmspeicher, einer Steuerung mit Programmbefehlen ladbar ist, um alle Schritte des oben beschriebenen Verfahrens auszuführen, wenn das Programm in der Steuerung ausgeführt wird. Dies hat den Vorteil, dass keine zusätzlichen Bauteile zur Abänderung bzw. Modifizierung des Verfahrens erforderlich sind. Das Computerprogrammprodukt kann in Form eines körperlichen Mediums, beispielsweise eines Halbleiterspeichers ausgebildet sein kann. Das Computerprogrammprodukt ist leicht an empirisch ermittelte Werte oder typspezifische Vorgaben anpassbar.

### Kurze Beschreibung der Zeichnungen

Die Erfindung wird im Folgenden unter Bezugnahme auf die Zeichnungen näher erläutert. Es zeigen:
- Fig. 1: einen schematischen Schaltplan einer erfindungsgemäßen Startvorrichtung und
- Fig. 2: ein schematisches Flussdiagramm eines erfindungsgemäßen Verfahrens.

### Ausführungsformen der Erfindung

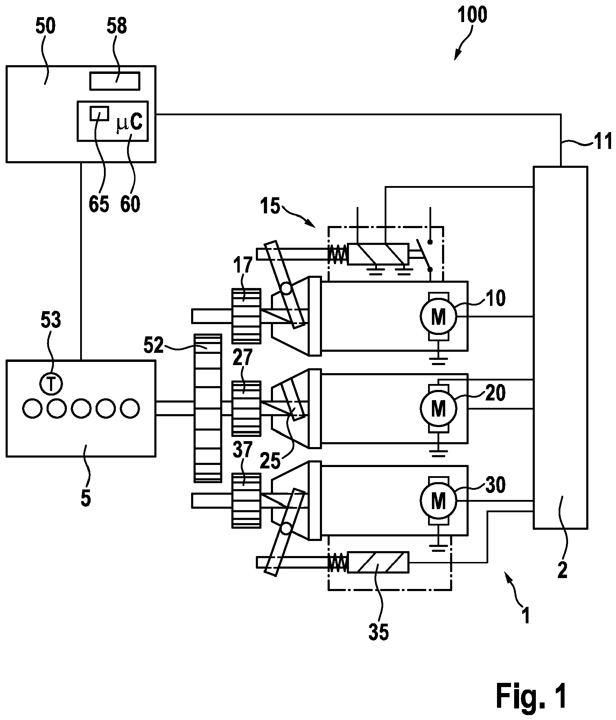

Die Fig. 1 zeigt einen schematischen Schaltplan einer erfindungsgemäßen Startvorrichtung 1, die eingebettet ist in ein erfindungsgemäßes Startsystem 100. Die Startvorrichtung 1 umfasst eine Startersteuerung 2 und mehrere Startermotoren 10, 20, 30. In der Fig. 1 sind drei Startermotoren 10, 20, 30 gezeigt. Diese Startermotoren 10, 20, 30 haben vorzugsweise jeweils die gleiche Leistung und sind deshalb baugleich. Es ergibt sich somit ein kostengünstigeres Herstellungsverfahren, da Sondermaßnahmen, insbesondere für einen Start-Stopp-Betrieb, nicht notwendig sind. Die Startersteuerung 2 ist separat von der Motorsteuerung 50 gezeigt, kann aber auch zumindest teilweise im letzteren integriert sein.

Jeder Startermotor 10, 20, 30 ist mit einer Kopplungsvorrichtung 15, 25, 35 ausgebildet, so dass mittels dieser, die Einspurrelais umfasst jeweils ein Starterritzel 17, 27, 37 in einen Zahnkranz 52 von einer Brennkraftmaschine 5 einspurbar ist, um die Brennkraftmaschine 5 zu starten. Die Brennkraftmaschine 5 wird ferner von einer Motorsteuerung 50 angesteuert und überwacht. Die Motorsteuerung 50 umfasst hierfür einen Mikrocomputer 60 mit einem Speicher 65. Um den Motor zu starten, wird über einen nicht dargestellten Startknopf die Motorsteuerung 50 aktiviert. Zum Starten der Brennkraftmaschine 5 wird einerseits die Einspritzung angesteuert als auch über eine Leitung 11 die Startersteuerung 2 aktiviert, um die Startermotoren 10, 20, 30 anzusteuern und die Brennkraftmaschine 5 zu starten. Die Startermotoren 10, 20, 30 mit ihren Kopplungsvorrichtungen 15, 25, 35 können unterschiedliche Motortypen sein, wie Reihen-, Neben- oder Doppelschlussmotoren. Sie können unterschiedlich in der Baugröße sein, verschiedenen Magnete oder Flussleitstücke umfassen. Ferner können die Kopplungsvorrichtungen 15, 25, 35 an verschiedene Getriebe, verschiedene externe Übersetzungen von Ritzel und Zahnkranz sowie verschiedene Kopplungsvorrichtungen in Form von Ketten, Riemen, Nockenwellen usw. umfassen.

Die bevorzugte Ausführungsform ist jedoch, wie in der Fig. 1 gezeigt, mit baugleichen Startermotoren 10, 20, 30 und baugleichen Kopplungsvorrichtungen 15, 25, 35 realisiert. Dies hat den Vorteil, dass mindestens ein Startermotor 10, 20, 30 redundant ausgebildet sein kann und die Startermotoren 10, 20, 30 auch zyklisch eingesetzt werden können.

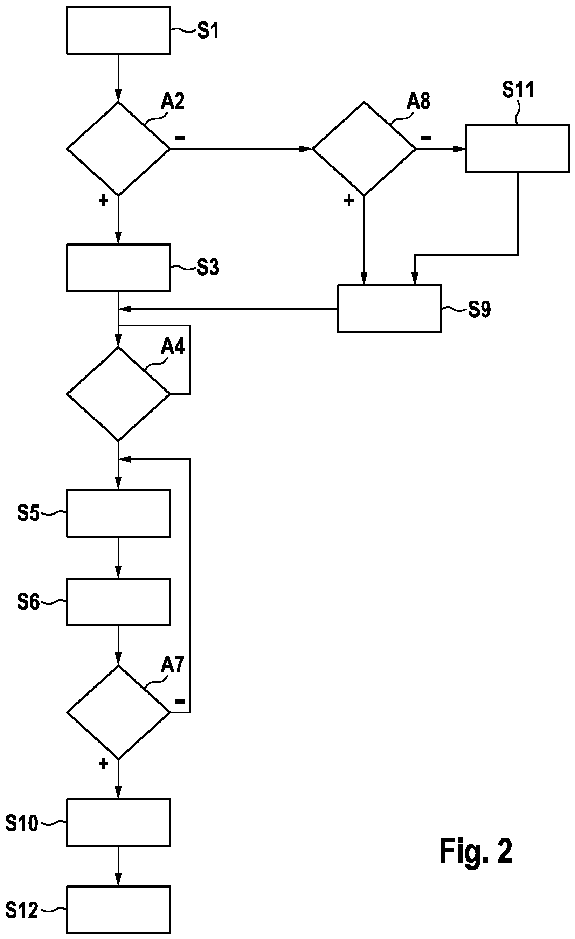

Wie zur Fig. 2 beschrieben ist, ist die Startersteuerung 2 mit einer Entscheidungseinrichtung ausgebildet, unabhängig von definierten Betriebszuständen zu entscheiden, wie viele Startermotoren 10, 20, 30 zum Start der Brennkraftmaschine 5 eingesetzt werden. Die Startersteuerung 2 unterscheidet zwischen mindestens drei verschiedenen Betriebszustandsstufen, in denen sie jeweils alle drei Startermotoren 10, 20, 30 nur zwei oder nur einen Startermotor ansteuert. Vorzugsweise sind die Betriebszustandsstufen Temperaturstufen der Brennkraftmaschine 5. Die Temperatur der Brennkraftmaschine 5 wird von der Motorsteuerung 50 abgefragt, und über die Leitung 11 der Startersteuerung 2 zur Verfügung gestellt. Zur Ermittlung der Temperatur ist ein Temperatursensor 53 am bzw. in der Brennkraftmaschine 5 integriert, der Sensorsignale an die Motorsteuerung 50 übermittelt.

Die Fig. 2 zeigt ein Flussdiagramm eines erfindungsgemäßen Verfahrens, wie es vorzugsweise in der Startersteuerung 2 abläuft, wenn das Programm in einem Programmspeicher 65 niedergelegt ist und von einem Mikrocomputer 60 abgearbeitet wird. Die Startersteuerung 2 ist separat von der Motorsteuerung 50 in der Fig. 1 gezeigt.

Es versteht sich, dass ein Teil der Startersteuerung auch in der Motorsteuerung 50 integriert sein kann und lediglich Schaltrelais zum Schalten von hohen Strömen für die Startermotoren 10, 20, 30 sowie zum Steuern der Kopplungsvorrichtungen 15, 25, 35 separat ausgebildet sind. Dies hätte den Vorteil, dass ein gemeinsamer Mikroprozessor 60 mit Programmspeicher 65 genutzt werden könnte.

In einem Schritt S1 wird die Startersteuerung 2 für einen Start der Brennkraftmaschine 5 angesteuert, beispielsweise weil ein Startknopf bzw. ein Zündschlüssel zum Starten der Brennkraftmaschine 5 getätigt worden ist oder weil eine Start-Stopp-Steuerung 58 einen Wiederstart der Brennkraftmaschine 5 aufgrund von Startbedingungen fordert.

Die Steuerung geht dann in den Schritt A2 über, in dem abgefragt wird, ob es sich bei dem Start um einen Kaltstart bzw. um einen Warmstart handelt. Handelt es sich um einen Kaltstart, so steht dies beispielsweise einem Betriebszustand gleich, in dem alle verfügbaren Startermotoren 10, 20, 30 erforderlich sind, so dass in einem nächsten Schritt S3 entschieden worden ist, dass alle Startermotoren 10, 20, 30 mit allen Kopplungsvorrichtungen 15,25, 35 eingespurt werden. Die Startersteuerung 2 steuert somit alle Kopplungsvorrichtungen 15, 25, 35 an.

In einem folgenden Abfrageschritt A4 wird geprüft, ob alle Kopplungsvorrichtungen 15, 25, 35 ein Starterritzel 17, 27, 37 jeweils in den Zahnkranz 52 der Brennkraftmaschine 5 eingespurt haben. Dies kann beispielsweise mit einer Informationsleitung an die Startersteuerung 2 erfolgen, so dass alle Startermotoren 10, 20, 30 gleichzeitig mit Strom beaufschlagt werden und nicht ein Startermotor die maximale Losbrechleistung zur Verfügung stellen muss, was mitunter ein hoher Verschleiß bzw. ein Durchbrennen des Startermotors bedeuten könnte.

Im Abfrageschritt A4 wartet somit das Verfahren solange, bis alle Starterritzel 17, 27, 37 eingespurt sind. Auch durch Strommessung kann auf das Einspurverhalten rückgeschlossen werden.

Daraufhin werden im Schritt S5 alle Startermotoren 10, 20, 30 bestromt, die von der Startersteuerung 2 zum Starten der Brennkraftmaschine 5 vorgesehen sind.

In einem Schritt S6 wird das Startverhalten der Startermotoren 10, 20, 30 überprüft, in dem aufgezeichnet wird, wie lange und mit wie viel Strom die Startermotoren 10, 20, 30 beaufschlagt werden.

In einem Schritt A7 wird abgefragt, ob die Brennkraftmaschine 5 gestartet ist. Sobald die Brennkraftmaschine 5 gestartet ist, werden in einem Schritt S10 die Startermotoren ausgeschaltet und die Starterritzel 17, 27, 37 im Schritt S12 ausgespurt.

Wird im Abfrageschritt A2 festgestellt, dass es sich nicht um einen Kaltstart handelt sondern einen Warmstart, so geht der Verfahrenablauf zur Abfrage A8 über, in der abgefragt wird, welches Temperaturfenster bzw. welches Fenster bei den Startbedingungen vorliegt. Das heißt, mit wie vielen Startermotoren kann die Brennkraftmaschine 5 gestartet werden soll, mit einem oder zwei. Das bedeutet, wird im Abfrageschritt A8 ein mittleres Temperaturfenster zum Start mit zwei Startermotoren verneint, so erfolgt ein Start nach einem dritten Temperaturfenster mit der höchsten Temperatur mit einem Startermotor.

Wenn im Schritt A8 entschieden worden ist, mit wie vielen Startermotoren 10, 20, 30 gestartet wird, so folgt in einem Schritt S9 eine Entscheidung mit welchen Startermotoren gestartet wird. Hierbei spielt eine Rolle, welcher der Startermotoren zuletzt im Betrieb war, so dass ein zyklischer Wechsel stattfindet. Außerdem spielt im Laufe der Lebensdauer eine Rolle, welche Startermotoren einen höheren Verschleiß- bzw. Fehlergrad aufweisen. Startermotoren mit einem höheren Verschleißgrad werden weniger beansprucht als Startermotoren mit einem niedrigeren Verschleißgrad. Außerdem werden Startermotoren, die defekt sind nicht mehr eingesetzt. Hierfür wird beispielsweise am Schluss nach dem Starten der Brennkraftmaschine 5 in einer Anzeige dem Fahrer mitgeteilt, wie dringend er eine Werkstatt aufsuchen muss.

Ist entschieden, welcher Startermotor 10, 20, 30 zum Starten eingesetzt wird, so folgt das Verfahren hier zur Abfrage A4, bei der die entsprechenden Kopplungsvorrichtungen 15, 25, 35 angesteuert worden sind und abgefragt wird, ob die Kopplungsvorrichtung 15, 25, 35 ein Starterritzel 17, 27, 37 eingespurt hat.

Im Übrigen folgt das Verfahren dann den folgenden Schritten mit Schritt S5, S6, S10 und S12 folgend, wie oben beschrieben worden ist. Alle Figuren zeigen lediglich schematische nicht maßstabsgerechte Darstellungen. Im Übrigen wird insbesondere auf die zeichnerische Darstellungen für die Erfindung als Wesentlich verwiesen.

## Patentansprüche

1. Startvorrichtung (1), insbesondere für einen Start-Stopp-Betrieb, mit einer Startersteuerung (2), mit einer Mehrzahl von Startermotoren (10, 20, 30) und mit mindestens einer Kopplungsvorrichtung (15, 25, 35), mit der zum Starten einer Brennkraftmaschine (5) jeder Startermotor (10, 20, 30) mit der Brennkraftmaschine (5) koppelbar ist,
wobei die Startersteuerung (2) dazu ausgebildet ist, in Abhängigkeit von definierten Betriebszuständen, insbesondere im Kaltstart oder Warmstart, alle, ein Teil oder einzelne Startermotoren (10, 20, 30) zum Starten der Brennkraftmaschine (5) anzusteuern,
wobei die Startersteuerung (2) derart ausgebildet ist, die Startermotoren (10, 20, 30) alternierend bei Warmstarts anzusteuern,
wobei die Startvorrichtung (1) eine Diagnosevorrichtung der Startermotoren (10, 20, 30) umfasst und
wobei die Startersteuerung (2) derart ausgebildet ist, die Startermotoren (10, 20, 30) in Abhängigkeit von einem Defekt nicht mehr anzusteuern, **dadurch gekennzeichnet, dass**
die Diagnosevorrichtung einen Verschleißgrad der Startermotoren (10, 20, 30) bewertet und die Startermotoren (10, 20, 30) alternierend in Abhängigkeit von dem bewerteten Verschleißgrad reduziert angesteuert werden.

2. Startvorrichtung (1) nach Anspruch 1, **dadurch gekennzeichnet, dass** die Startermotoren (10, 20, 30) und, insbesondere die Kopplungsvorrichtung (15, 25, 35), in unterschiedlicher Baugröße und mit verschiedenen Betriebskennlinie ausgebildet sind, insbesondere mindestens ein Startermotor ein hohes Drehmoment und mindestens ein anderer Startermotor als Hochlaufunterstützung ausgebildet ist.

3. Startvorrichtung (1) nach Anspruch 1 oder 2, **dadurch gekennzeichnet, dass** bezogen auf Auspendelstellen einer Abtriebswelle der Brennkraftmaschine (5), insbesondere zu einem Zahnkranz (52) der Brennkraftmaschine (5), versetzt zu einander angeordnet sind.

4. Startvorrichtung (1) nach einem der Ansprüche 1 bis 3, **dadurch gekennzeichnet, dass** die Startvorrichtung (1) eine Einrichtung für einen Synchronisation zur gleichzeitigen Strombeaufschlagung der Startermotoren (10, 20, 30) umfasst, wobei die Startvorrichtung (1) insbesondere mit einer Prüfeinrichtung ausgebildet ist, mit der überprüft wird, ob die jeweilige Kopplungsvorrichtung (15, 25, 35) richtig eingekoppelt ist, bevor der Startermotor (10) bestromt wird.

5. Startsystem für einen Start-Stopp-Betrieb mit einer Startvorrichtung (1) nach Anspruch 1, die eine Startersteuerung (2), einen Startermotor (10, 20, 30) mit einer Kopplungsvorrichtung (15, 25, 35) und eine Start-Stopp-Steuerung umfasst, **wobei** die Startvorrichtung (1) mindestens einen weiteren Startermotor (10, 20, 30) mit einer Kopplungsvorrichtung (15, 25, 35) zum Starten einer Brennkraftmaschine (5) umfasst.

6. Verfahren zum Betreiben einer Startvorrichtung (1) mit einer Startersteuerung (2) und einer Mehrzahl von Startermotoren (10, 20, 30) und dazugehörigen Kopplungsvorrichtungen (15, 25, 35), wobei zum Starten einer Brennkraftmaschine (5) zumindest die Startermotoren (10, 20, 30) von der Startersteuerung (2) angesteuert werden,
wobei von definierten Betriebszuständen abhängig von der Startersteuerung (2) entschieden und ausgeführt wird, wie viele Startermotoren (10, 20, 30) und welche Startermotoren (10, 20, 30) zum Starten der Brennkraftmaschine (5) von der Startersteuerung (2) angesteuert werden,
wobei die Startermotoren (10, 20, 30) bei Warmstarts in reduzierter Anzahl im Start-Stopp-Betrieb alternierend angesteuert werden,
wobei die Startvorrichtung (1) eine Diagnosevorrichtung der Startermotoren (10, 20, 30) umfasst und
wobei die Startersteuerung (2) die Startermotoren (10, 20, 30) in Abhängigkeit von einem Defekt nicht mehr ansteuert,
**dadurch gekennzeichnet, dass**
die Diagnosevorrichtung einen Verschleißgrad der Startermotoren (10, 20, 30) bewertet und die Startermotoren (10, 20, 30) alternierend von der Startersteuerung (2) in Abhängigkeit von dem bewerteten Verschleißgrad reduziert angesteuert werden.

7. Verfahren nach Anspruch 6, **dadurch gekennzeichnet, dass** definierte Betriebszustände durch Temperaturfenster der Brennkraftmaschine (5) und insbesondere der Startermotoren (10, 20, 30) bestimmt festgelegt sind, und die Startermotoren (10, 20, 30) abhängig vom jeweiligen Temperaturfenster alle, zum Teil oder einzeln angesteuert werden.

8. Verfahren nach Anspruch 6 oder 7, **dadurch gekennzeichnet, dass** für einen Kaltstart alle Startermotoren (10, 20, 30) mit Strom beaufschlagt werden, insbesondere die Anzahl der Startermotoren (10, 20, 30) in Abhängigkeit von Stufen von Betriebszuständen, insbesondere von Temperaturstufen, angesteuert werden und besonders bevorzugt die Startermotoren (10, 20, 30) bei Warmstarts in reduzierter Anzahl im Start-Stopp-Betrieb in einem Zyklusangesteuert werden.

9. Verfahren nach Anspruch 6, **dadurch gekennzeichnet, dass** die Startermotoren (10, 20, 30) überwacht werden, insbesondere die Stromaufnahme und die Startdauer, und die Startermotoren (10, 20, 30) vom Verschleißgrad abhängig angesteuert werden, besonders bevorzugt der Verschleißgrad bewertet und gespeichert wird.

10. Computerprogrammprodukt, das in einen Programmspeicher mit einer Steuerung (2) mit Programmbefehlen ladbar ist, um alle Schritte eines Verfahrens nach zumindest einem der Ansprüche 6 bis 9 auszuführen, wenn das Programm in eine Startersteuerung (2) einer Startvorrichtung (1) nach zumindest einem der Ansprüche 1 bis 5 ausgeführt wird.

## Claims

1. A starting device (1), in particular for a start-stop operation, with a starter control (2), with a plurality of starter motors (10, 20, 30) and with at least one coupling device (15, 25, 35), with which each starter motor (10, 20, 30) can be coupled to an internal combustion engine (5) for starting the internal combustion engine (5),
the starter control (2) being designed to activate all, some or individual starter motors (10, 20, 30) for starting the internal combustion engine (5) as a function of defined operating states, in particular in the cold start or warm start,
the starter control (2) being designed in such a way that the starter motors (10, 20, 30) are activated alternately during warm starts,
the starting device (1) comprising a diagnostic device for the starter motors (10, 20, 30), and
the starter control (2) being designed in such a way that the starter motors (10, 20, 30) are no longer activated as a function of a defect,
**characterised in that**
the diagnostic device evaluates a degree of wear of the starter motors (10, 20, 30), and the starter motors (10, 20, 30) are alternately activated in a reduced manner as a function of the evaluated degree of wear.

2. The starting device (1) according to claim 1, **characterised in that** the starter motors (10, 20, 30) and, in particular, the coupling device (15, 25, 35) are designed in different sizes and with different operating characteristics, in particular at least one starter motor has a high torque and at least one other starter motor is designed as a run-up support.

3. The starting device (1) according to claim 1 or 2, **characterised in that** they are arranged offset from one another in relation to swing points of an output shaft of the internal combustion engine (5), in particular in relation to a gear rim (52) of the internal combustion engine (5).

4. The starting device (1) according to one of the claims 1 to 3, **characterised in that** the starting device (1) comprises a device for synchronisation for simultaneous current application to the starter motors (10, 20, 30), the starting system (1) being designed in particular with a testing device for checking whether the respective coupling device (15, 25, 35) is correctly coupled before the starter motor (10) is supplied with current.

5. A starting system for a start-stop operation comprising a starting device (1) according to claim 1, which comprises a starter control (2), a starter motor (10, 20, 30) with a coupling device (15, 25, 35) and a start-stop control, wherein the starting device (1) comprises at least one further starter motor (10, 20, 30) with a coupling device (15, 25, 35) for starting an internal combustion engine (5).

6. A method for operating a starting device (1) with a starter control (2) and a plurality of starter motors (10, 20, 30) and associated coupling devices (15, 25, 35), wherein at least the starter motors (10, 20, 30) are activated by the starter control (2) for starting an internal combustion engine (5),
wherein the number of starter motors (10, 20, 30) and which starter motors (10, 20, 30) are activated by the starter control (2) for starting the internal combustion engine (5) is decided and executed by the starter control (2) as a function of defined operating states,
wherein the starter motors (10, 20, 30) are activated alternately in a reduced number in start-stop operation during warm starts,
wherein the starter device (1) comprises a diagnostic device of the starter motors (10, 20, 30) and
the starter control (2) no longer activating the starter motors (10, 20, 30) as a function of a defect,
**characterised in that**
the diagnostic device evaluates a degree of wear of the starter motors (10, 20, 30) and the starter motors (10, 20, 30) are alternately activated in a reduced manner by the starter control (2) as a function of the evaluated degree of wear.

7. The method according to claim 6, **characterised in that** defined operating states are determined by temperature windows of the internal combustion engine (5) and in particular of the starter motors (10, 20, 30), and the starter motors (10, 20, 30) are all, partially or individually activated depending on the respective temperature window.

8. The method according to claim 6 or 7, **characterized in that** for a cold start all starter motors (10, 20, 30) are supplied with current, in particular the number of starter motors (10, 20, 30) is activated as a function of stages of operating states, in particular of temperature stages, and in particular preferably the starter motors (10, 20, 30) are activated in a cycle in a reduced number in start-stop operation during warm starts.

9. The method according to claim 6, **characterised in that** the starter motors (10, 20, 30) are monitored, in particular the current consumption and the starting duration, and the starter motors (10, 20, 30) are activated depending on the degree of wear, in particular preferably the degree of wear is evaluated and stored.

10. A computer program product which can be loaded into a program memory with a controller (2) with program instructions in order to execute all steps of a method according to at least one of claims 6 to 9, when the program is executed in a starter controller (2) of a starting device (1) according to at least one of claims 1 to 5.

## Revendications

1. Dispositif de démarrage (1), en particulier pour une opération de démarrage-arrêt, ayant une commande de démarreur (2), une pluralité de moteurs de démarreur (10, 20, 30) et au moins un dispositif d'accouplement (15, 25, 35) au moyen duquel, pour le démarrage d'un moteur à combustion interne (5), chaque moteur de démarreur (15, 25, 35) peut être accouplé audit moteur à combustion interne (5),
dans lequel la commande de démarreur (2) est conçue de manière à commander, en fonction d'états de fonctionnement définis, en particulier lors du démarrage à froid ou du démarrage à chaud, la totalité, une partie ou certains des moteurs de démarreur (10, 20, 30) pour le démarrage du moteur à combustion interne (5),
dans lequel la commande de démarreur (2) est conçue de manière à commander les moteurs de démarreur (10, 20, 30) de manière alternée lors du démarrage à chaud,
dans lequel le dispositif de démarrage (1) comprend un dispositif de diagnostic des moteurs de démarreur (10, 20, 30) et
dans lequel la commande de démarreur (2) est conçue de manière à ne plus commander les moteurs de démarreur (10, 20, 30) en fonction d'un défaut,
**caractérisé en ce que** le dispositif de diagnostic évalue un degré d'usure des moteurs de démarreur (10, 20, 30) et les moteurs de démarreur (10, 20, 30) sont alternativement commandés de manière réduite en fonction du degré d'usure évalué.

2. Dispositif de démarrage (1) selon la revendication 1, **caractérisé en ce que** les moteurs de démarreur (10, 20, 30) et, en particulier le dispositif d'accouplement (15, 25, 35), sont conçus dans différentes tailles et avec différentes caractéristiques de fonctionnement, en particulier au moins un moteur de démarreur est conçu avec un couple élevé et au moins un autre moteur de démarreur est conçu comme une assistance à la montée en régime.

3. Dispositif de démarrage (1) selon la revendication 1 ou 2, **caractérisé en ce que** sur la base de positions pendulaires d'un arbre d'entraînement du moteur à combustion interne (5), en particulier par rapport à une couronne dentée (52) du moteur à combustion interne (5), les moteurs de démarreur sont agencés de manière décalée les uns par rapport aux autres.

4. Dispositif de démarrage (1) selon l'une des revendications 1 à 3, **caractérisé en ce que** le dispositif de démarrage (1) comprend un dispositif de synchronisation pour une application simultanée de courant aux moteurs de démarreur (10, 20, 30), dans lequel le dispositif de démarrage (1) est en particulier conçu avec un dispositif de vérification au moyen duquel il est vérifié que le dispositif d'accouplement (15, 25, 35) respectif est correctement accouplé, avant d'alimenter le moteur de démarreur (10) en courant.

5. Système de démarrage pour une opération de démarrage-arrêt avec un dispositif de démarrage (1) selon la revendication 1, comprenant une commande de démarreur (2), un moteur de démarreur (10, 20, 30) avec un dispositif d'accouplement (15, 25, 35) et une commande de démarrage-arrêt, dans lequel le dispositif de démarrage (1) comprend au moins un moteur de démarreur supplémentaire (10, 20, 30) avec un dispositif d'accouplement (15, 25, 35) pour le démarrage d'un moteur à combustion interne (5).

6. Procédé pour faire fonctionner un dispositif de démarrage (1) avec une commande de démarreur (2) et une pluralité de moteurs de démarreur (10, 20, 30) et des dispositifs d'accouplement (15, 25, 35) associés, dans lequel au moins les moteurs de démarreur (10, 20, 30) sont commandés par la commande de démarreur (2) afin de démarrer un moteur à combustion interne (5),
dans lequel la commande de démarreur (2) décide et met en œuvre, en fonction d'états de fonctionnement définis, le nombre de moteurs de démarreur (10, 20, 30) et les moteurs de démarreur (10, 20, 30) qui doivent être commandés pour démarrer le moteur à combustion interne (5),
dans lequel, lors du démarrage à chaud, les moteurs de démarreur (10, 20, 30) sont alternativement commandés en nombre réduit pendant l'opération de démarrage-arrêt,
dans lequel le dispositif de démarrage (1) comprend un dispositif de diagnostic des moteurs de démarreur (10, 20, 30) et
dans lequel la commande de démarreur (2) ne commande plus les moteurs de démarreur (10, 20, 30) en fonction d'un défaut,
**caractérisé en ce que**
le dispositif de diagnostic évalue un degré d'usure des moteurs de démarreur (10, 20, 30) et les moteurs de démarreur (10, 20, 30) sont commandés de manière réduite en alternance par la commande de démarreur (2) en fonction du degré d'usure évalué.

7. Procédé selon la revendication 6, **caractérisé en ce que** des états de fonctionnement définis sont déterminés par des fenêtres de température du moteur à combustion interne (5) et en particulier des moteurs de démarreur (10, 20, 30), et les moteurs de démarreur (10, 20, 30) sont commandés en totalité, partiellement ou individuellement en fonction de la fenêtre de température respective.

8. Procédé selon la revendication 6 ou 7, **caractérisé en ce que** pour un démarrage à froid, tous les moteurs de démarreur (10, 20, 30) sont alimentés en courant, en particulier le nombre des moteurs de démarreur (10, 20, 30) est commandé en fonction de niveaux d'états de fonctionnement, en particulier par des niveaux de température, et de manière particulièrement préférée, lors du démarrage à chaud, les moteurs de démarreur (10, 20, 30) sont commandés en nombre réduit sur un cycle pendant l'opération de démarrage-arrêt.

9. Procédé selon la revendication 6, **caractérisé en ce que** les moteurs de démarreur (10, 20, 30) sont surveillés, en particulier la consommation de courant et la durée de démarrage, et les moteurs de démarreur (10, 20, 30) sont commandés en fonction du degré d'usure, de manière particulièrement préférée en évaluant et en enregistrant le degré d'usure.

10. Produit de programme informatique qui peut être chargé dans une mémoire de programme en utilisant une commande (2) avec des instructions de programme, afin de mettre en œuvre toutes les étapes d'un procédé selon au moins une des revendications 6 à 9, lorsque le programme est exécuté dans une commande de démarreur (2) d'un dispositif de démarrage (1) selon au moins une des revendications 1 à 5.
